# EUROPEAN PATENT SPECIFICATION

(11) **EP 2 911 447 B1**
(45) Date of publication and mention of the grant of the patent: **17.06.2020**
(21) Application number: 14305260.3
(22) Date of filing: 25.02.2014
(51) Int. Cl.: H04W 36/00, H04W 84/00

(54) **Wireless telecommunications network nodes and methods**
Drahtlose Telekommunikationsnetzwerkknoten und Verfahren
Noeuds de réseau de télécommunications sans fil et procédés

(43) Date of publication of application: 26.08.2015
(73) Proprietor: Alcatel Lucent, 91620 Nozay (FR)
(72) Inventor: Shahid, Malek, Swindon, Wiltshire SN5 7DJ (GB); Brend, Graham, Swindon, Wiltshire SN5 7DJ (GB)
(74) Representative: Leppard, Andrew John

(56) References cited:
- EP-A1- 1 959 701
- EP-A2- 2 549 797
- WO-A1-2012/089237
- WO-A1-2012/158085
- WO-A2-00/36858

## Description

### FIELD OF THE INVENTION

The present invention relates to wireless telecommunications network nodes, methods and computer program products.

### BACKGROUND

Wireless telecommunication networks are known. In such networks, mobile communication devices (for example, mobile telephones) are operable to communicate with base stations provided by network providers.

In known wireless telecommunication networks, radio coverage is provided to network connectable devices, such as mobile telephones, or wireless devices such as tablets, within areas known as cells. A base station is located in each cell to provide radio coverage. Typically, network connectable devices in each cell are operable to receive information and data from a base station and to transmit information and data to a base station.

User equipment roam through the wireless communications network. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links.

Traditional base stations provide coverage in relatively large geographical areas and those cells are often referred to as macro cells. It is possible to provide a heterogeneous network (HetNet) where smaller-sized cells are provided within macro cells. Such smaller sized cells are sometimes referred to as low-power nodes (LPN), micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity within a network.

Deployment of small cells in a wireless communication network can assist a network in relation to handling capacity in high traffic areas, for example, so-called hot spot areas. An ability to offload traffic to a small cell or cells located in a high traffic area of a network may be particularly useful to a network operator.

Although HetNet deployments may offer advantages, unexpected consequences of such deployments may occur. It is desired to address those consequences.

WO 00/36858 discloses a mobile cell deployed on a vehicle providing coverage to terminals within said vehicle. When the vehicle is stationary within a fixed cell handovers between the fixed cell and stationary mobile cell are allowed. Broadcast messages indicating a cell covering a station as a neighbouring cell are provided as the mobile cell enters the cell of the station and handovers are then possible.

WO 2012/158085 discloses a set of terminals that are attached to a mobile relay node and handed over from one donor base station to another donor base station as the relay node moves. The donor cells provide the relay node with information regarding cells neighbouring the donor cells.

EP2549797 also deals with mobile relay nodes and donor base stations. It describes mechanisms to exchange information between the relay node and donor base stations to allow the neighbour cell lists maintained at the source (relay node) and destination (donor base station) to be kept up to date to facilitate handover.

EP1959701 discloses how a handover is performed by a UE in a lift as it moves between floors. This includes preparing resources on the second (i.e. target) base station ahead of time to facilitate the handover of a UE in the lift.

### SUMMARY

According to a first aspect, there is provided a train gateway network node as set out in independent claim 1.

The first aspect recognizes that it is possible to deploy small cells in places other than typical residential or office-type environments. For example, small cells could be deployed on passenger trains to provide coverage to user equipment within those trains. In particular, small cells could be deployed within a train, whereby the small cell can provide a good quality, continuous coverage to a number of user equipment within the train. Deploying a dedicated small cell within such a vehicle has a number of advantages, not least that the user equipment are guaranteed good quality wireless coverage and do not have to perform numerous handovers between cells as the vehicle moves through the macro cell network, as would be the case if the user equipment were connected to base stations within the macro network. In addition, since the radio link is provided within the train itself, the radio link does not suffer from penetration loss (i.e. signal loss encountered by the radio waves from the material of the body of the train) and there is also no impact from high Doppler shifting as the fast-moving train moves through the macro network. All of these advantages reduce the potential for an ongoing call established by a user equipment on the train to be dropped, or to suffer from bad quality, compared to the situation where the user equipment was connected to the macro network. A typical train may have one or more small cells deployed (for example, one per carriage) so as to provide coverage throughout the train as well as supporting enough capacity to serve the number of user equipment that are likely to be on board.

However, one consequence of deploying small cells on a train in order to provide a good quality radio link for user equipment on board the train is that the user equipment will need to be efficiently handed over between the small cell network on the train and the macro network when the user equipment exit or enter the train. The handover of user equipment between cells is a typical scenario where the chances of the user equipment connection to the network being dropped are increased, which in turn can lead to end-user dissatisfaction with the mobile network operator, particularly since ubiquitous and seamless mobile network coverage is becoming an increasing expectation of mobile network and end users.

Accordingly, the first aspect recognizes that providing an arrangement that can optimize the handover of user equipment between a vehicle network and the macro network when user equipment exit or enters a vehicle would be beneficial. Without such an arrangement, existing handover mechanisms would need to be used. However, due to the nature and physical configuration of a vehicle-born network, it can take some time before user equipment that exits a vehicle can detect and trigger a handover event towards a fixed macro network or, similarly, a delay before the user equipment that enters a vehicle can detect and trigger a handover event towards a small cell deployed on the vehicle. Such delays can potentially lead to call drops as user equipment quickly leave the coverage area of the cell that they were served by. In addition, a large number of user equipment can move between networks at the same time, which can cause congestion, signalling overhead and also an increased chance of call drops.

Accordingly, a network node for a wireless telecommunications network may be provided. The network node may comprise logic which determines whether a train carrying or having thereon a mobile base station which provides an associated mobile cell is transiting to a destination which is encompassed by a cell provided by an associated base station. The network node may also comprise neighbour logic which, when it is determined that the train is transiting to the destination comprising a station platform, instructs that a neighbour cell list of either the mobile cell or the cell or both is updated to indicate that the mobile cell and the cell are neighbours. In this way, the neighbour cell lists are updated to indicate when the mobile cell and the cell are neighbours so that the user equipment may be provisioned to facilitate handover between the mobile cell and the cell when the train arrives at the destination. This helps to optimize handover and reduce the probability of the connection being dropped should the user equipment board or exit the train.

The determining logic is operable to determine that the train is transiting to the destination when proximity of the train to a boundary cell prior to the destination is detected. Accordingly, a boundary cell is detected which indicates that the train is transiting to the destination.

In one aspect, the neighbour logic is operable to instruct that neighbour cell lists of the mobile cell and the cell are updated to indicate that the mobile cell and the cell are neighbours. Accordingly, temporary neighbour cell lists may be provided which are updated for the duration that the train is proximate the destination.

In one aspect the determining logic is operable to determine whether the train is transiting from the destination and the neighbour logic is operable, in response to the determining logic determining that the train is transiting from the destination, to instruct that the neighbour cell list of the cell is updated to remove the mobile cell as a neighbour. Accordingly, when it is determined that the train is leaving the destination then the neighbour cell list may be updated to remove the mobile cell as a neighbour of the cell.

In one aspect, the neighbour logic is operable, in response to the determining logic determining that the train is transiting from the destination, to instruct that the neighbour cell list of the mobile cell is updated to remove the cell as a neighbour. Accordingly, when the train leaves the destination the neighbour cell list of the mobile cell may be updated to remove the cell as a neighbour.

In one aspect, the determining logic is operable to determine that the train is transiting from the destination when proximity of the train to a boundary cell following the destination is detected. Accordingly, the presence of a boundary cell encountered after the destination may indicate that the train is leaving the destination.

In one aspect, the network node comprises a mobile gateway co-located with the mobile base station, the determining logic operable to determine that the train is transiting to the destination when the boundary cell is detected by the determining logic and the neighbour logic is operable, in response to the determining logic determining that the train is transiting to the destination, to instruct that the neighbour cell list of the cell is updated to indicate that the mobile cell and the cell are neighbours by transmitting characteristics of the mobile cell to the boundary base station.

In one aspect, the neighbour logic is operable, in response to the determining logic determining that the train is transiting to the destination, to instruct that the neighbour cell list of the mobile cell is updated to indicate that the mobile cell and the cell are neighbours in response to characteristics of the cell received from the boundary base station.

In one aspect, the determining logic is operable to determine that the train is transiting from the destination when the boundary cell following the destination is detected by the determining logic and the neighbour logic is operable, in response to the determining logic determining that the train is transiting from the destination, to instruct that the neighbour cell list of the cell is updated to remove the mobile cell as a neighbour by transmitting an instruction to a boundary base station providing the boundary cell.

In one aspect, the network node comprises a boundary cell base station, the determining logic is operable to determine that the train is transiting to the destination when the transmissions from the train are detected by the determining logic and the neighbour logic is operable, in response to the determining logic determining that the train is transiting to the destination, to instruct that the neighbour cell list of the cell is updated to indicate that the mobile cell and the cell are neighbours in response to characteristics of the mobile cell received from the train.

In one aspect, the neighbour logic is operable, in response to the determining logic determining that the train is transiting to the destination, to instruct that the neighbour cell list of the mobile cell is updated to indicate that the mobile cell and the cell are neighbours by transmitted characteristics of the cell to the train.

In one aspect, the neighbour logic is operable to instruct that the neighbour cell list of the cell is updated to remove that the mobile cell and the cell are neighbours in response to an instruction received from the train.

In one aspect, the train carries a plurality of mobile base stations providing a plurality of mobile cells and the destination is encompassed by a plurality of cells provided by a plurality of base stations and the neighbour logic is operable, in response to the determining logic determining that the train is transiting to the destination, to instruct that a neighbour cell list of the plurality of mobile cells and the plurality of cells is updated to indicate that at least a sub-set of the mobile cells and at least a sub-set of the cells are neighbours.

According to a second aspect, there is provided a method executed by a train gateway network node according to independent claim 13.

In one embodiment, the instructing comprises instructing that neighbour cell lists of the mobile cell and the cell are updated to indicate that the mobile cell and the cell are neighbours.

According to a third aspect, there is provided a computer program product as defined in claim 14 which is operable, when executed on a processor of a train gateway network, to perform the method steps of the second aspect as defined in claim 13.

Further particular and preferred aspects are set out in the accompanying independent and dependent claims. Features of the dependent claims may be combined with features of the independent claims as appropriate.
Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates an example arrangement of network nodes according to one embodiment; and
Figure 2 illustrates example messaging between those network nodes according to one embodiment.

### DESCRIPTION OF THE EMBODIMENTS

Before discussing the embodiments in any more detail, first an overview will be provided. Embodiments provide an arrangement which optimizes the handover of user equipment as they board or leave a vehicle (such as a train, bus or car) when it transits to a destination (such as a station, home or workplace). Typically, the vehicle is provided with one or more 'mobile' or transiting base stations which provide mobile cells which transit with the vehicle and provide coverage to user equipment on that vehicle. Typically, the destination where the user equipment embarks or disembarks from the vehicle falls within the coverage area of a one or more cells provided by one or more 'destination' base stations.

A mechanism is provided which optimizes handover of user equipment as they board or leave the train. In particular, when it is detected that the train is transiting to a destination comprising a station platform, a neighbour cell list of the mobile cells and/or the destination cell is updated to indicate that the mobile cells and the destination cell are neighbours. This enables the neighbour cell lists to be updated temporarily to reflect the presence of new neighbour cells. The change in the neighbour cell lists can then be transmitted by those cells to user equipment being supported within those cells. This provides the user equipment with appropriate details of the neighbouring cells which enables optimized handover of the user equipment should they board or leave the train, thereby handing between the mobile cells and the destination cell. Once the train continues its journey, the neighbour cell lists may be further updated to remove the mobile cell and cell as neighbours.

Accordingly, a mechanism is provided which optimizes the handover of user equipment as they board and leave a train at a station platform. The train that is deployed with small cells to provide coverage within the vehicle exchanges information with fixed cells deployed in the macro network in order to facilitate the handover of user equipment between the vehicle and the macro network.

### Example Operation

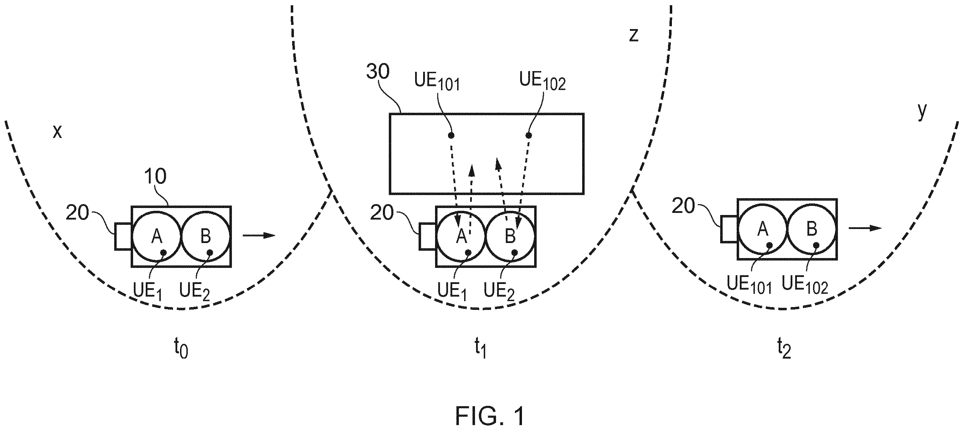

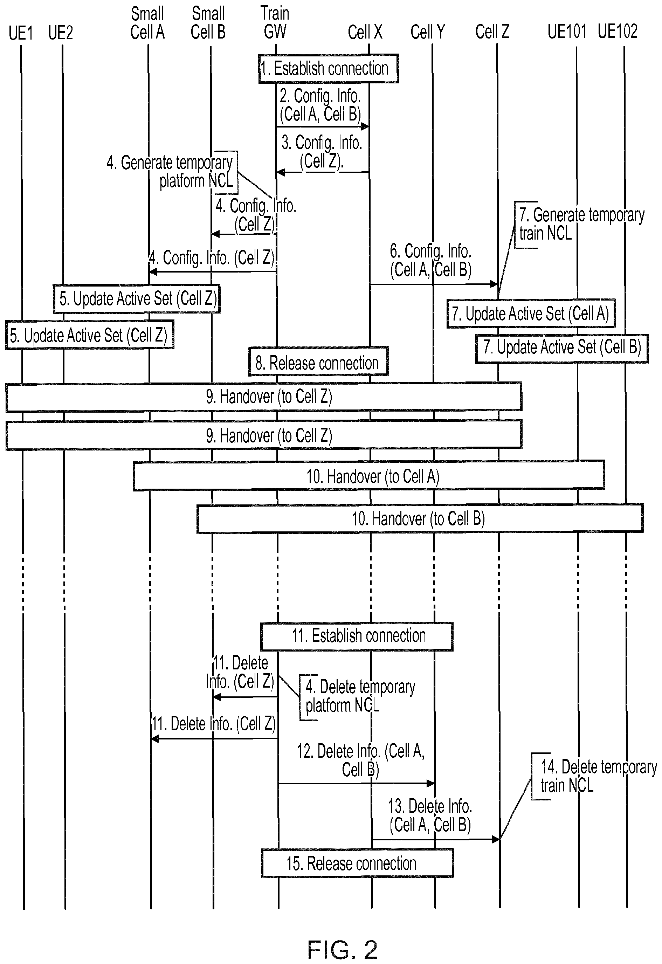

Figure 1 illustrates an example arrangement of network nodes according to one embodiment and Figure 2 illustrates example messaging between those network nodes according to one embodiment.

### Vehicle Configuration

A vehicle, in this example a train 10 is provided, which is equipped with mobile base stations (not shown) which in this example provide two small cells A, B to which user equipment UE1, UE2 travelling on the train 10 may attach. It will be appreciated that although in this example two small cells are provided, fewer or more small cells may be provided, dependent upon the needs of the train 10. A vehicle gateway 20 is provided which controls the operation of the small cell base stations, communicates with an underlying macro network and provides a suitable backhaul for data to and from the train 10. In particular, the vehicle gateway 20 hosts functionality that can both control the configuration of the small cells A, B deployed on the train 10 and can also act as a proxy between the small cells A, B on the train 10 and the macro cellular network through which the train 10 passes. Such a vehicle gateway 20 would thus typically support a wireless interface between the train 10 and the macro network.

As can be seen in Figure 1, because the train 10 transits through the underlying macro network, the status of the neighbour cell lists for the small cells A and B and for the macro cells X, Y, Z will change, dependant on the location of the train 10 within the macro cell network. These changes become even more frequent and complex to manage as the number of vehicles and the number of small cells increases.

Accordingly, embodiments provide a mechanism which triggers the update of neighbour cell lists at the appropriate time in order to minimise network load whilst still ensuring that the neighbour cell lists are updated at the appropriate time to facilitate smooth handover of user equipment between vehicles and the macro network.

### Station Boundary Cell

In this embodiment, macro cell X is designated as a "station boundary" cell. Cell X may be an existing macro cell which is deployed at a well-known trackside location to provide coverage at a specific part of a railway track along which the train 10 travels. Alternatively, macro cell X may be specifically deployed for this purpose. In any event, macro cell X is located at a point which it is known that the train 10 will pass prior to arriving at the station platform 30.

As can be seen in Figure 1, at time to, the train 10 moves along the track and detects the presence of the (station boundary) macro cell X. Accordingly, at step 1 of Figure 2, the train gateway 20 establishes a wireless link to the (station boundary) macro cell X in order to exchange information with the (station boundary) macro cell X.

At step 2, after connection with the (station boundary) macro cell X is established, the train gateway 20 provides the (station boundary) macro cell X with useful information about the small cells deployed on the train 10. In particular, at step 2, the train gateway 20 provides information about small cell A and B. For example, the train gateway 20 may provide one or more of the identities of the cells on the train 10, the primary scrambling codes used by the small cells, the current transmission power of each small cell, and the number of user equipment currently being served by each small cell. Providing information about the number of user equipment being served by each small cell enables the network to make decisions about how to distribute those user equipment at the destination by manipulating their neighbour cell lists in anticipation of the user equipment entering the vehicle when it arrives at the destination.

At step 3, (station boundary) macro cell X provides information about the platform cell (macro cell Z) providing coverage over the platform 30 that the train is arriving at in the station.

At step 4, the train gateway 20 forms a temporary platform neighbour cell list which consists of information about (platform) macro cell Z and forwards this information to cell A and cell B.

At step 5, cell A and cell B then update the active set of user equipment on board the train 10. In this example, UE1 and UE2 have their active set (or monitored set) updated to include (platform) macro cell Z. By updating the active set or monitored set of the user equipment on the train, quick and efficient handover can then occur when any user equipment departs from the train since the parameters or characteristics of the (platform) macro cell Z are now already known and preconfigured within those user equipment.

At step 6, the (station boundary) macro cell X forwards information about cell A and cell B to the (platform) macro cell Z. In this way, information is forwarded by the station boundary cell to the cell or cells that have been deployed to cover the platform which the train is approaching. This enables the platform cells that cover the relevant platform in the station to be provided with information about the small cells that are deployed on the approaching train.

At step 7, (platform) macro cell Z generates a temporary train neighbour cell list consisting of information about cell A and cell B. Depending on the mobile network topology, the information will either be forwarded directly from the station boundary cell to the associated platform cells or will be sent via intermediate network nodes. The temporary train neighbour cell list can be used by the relevant platform cells to prioritise which cells are provided to user equipment in the immediate vicinity for determining handover events, etc. (Platform) macro cell Z updates the active set of user equipment that are on the platform; in this example, UE101 and UE102.

In this example, (platform) macro cell Z spreads the load such that the active set of UE101 is updated to include cell A and the active set of UE102 is updated to include cell B. Thus, as user equipment board the train they can be quickly and efficiently handed over to small cells deployed on the train 10, as those small cells will have been preconfigured into each of the user equipment's neighbour cell list. Such a prioritisation of cells would include adding one or more of the cells in the temporary train neighbour list to the active or monitored set of user equipment currently served by the (platform) macro cell Z.

As mentioned above, it is possible to spread the user equipment under the platform cell coverage area between various small cells deployed on the train 10. This ensures that the number of user equipment that are likely to board the train 10 are spread across the deployed small cells, which will prevent overload of any one small cell on the train 10 and minimise the possibility of calls being dropped as user equipment move from the platform cell to the small cells. Also, knowledge of user equipment position on the platform can used to ensure that they are handed over to the small cells which are proximate those positions when the train 10 stops.

At step 8, as the train 10 travels into the station it releases the connection with the (station boundary) macro cell X.

### Platform Cells

Accordingly, at time t₁ the train 10 arrives at the relevant platform. Thereafter, UE1 and UE2 exit the train 10 and are handed over to (platform) macro cell Z at step 9. Also, at step 10, UE101 and UE102 board the train 10. UE101 is handed over from (platform) macro cell Z to small cell A and UE102 is handed over from (platform) macro cell Z to small cell B.

Similarly, if there is more than one platform macro cell deployed, the train gateway 20 can manage how each of the small cells A, B on the train 10 generates a temporary platform neighbour cell list to spread the number of user equipment on the train between the cells deployed on the platform to again facilitate a smooth handover of user equipment as they leave the train 10. In particular, where the geographical range of the small cells and platform cells are closely co-located, the spatial arrangement of the cells could be indicated in the information transferred between the station boundary cell and the train gateway 20 to ensure that spatially co-located cells are prioritised within their neighbour cell lists.

The train 10 then leaves the station and, at time t₂, enters the coverage area of the (station boundary) macro cell Y. Accordingly, at step 11, the train gateway 20 establishes a connection to (station boundary) macro cell Y. The train gateway 20 determines that the train 10 must now have left the station and so switches to an exit mode where it deletes the temporary platform neighbour cell list and information about (platform) macro cell Z from cell A and cell B.

At step 12, the train gateway 20 also indicates to (station boundary) macro cell Y that information about cells A and B should be deleted.

At step 13, (station boundary) macro cell Y does not provide any information to the train gateway 20 about associated platform cells but, instead, forwards the deletion indication provided to it by the train gateway 20 to (platform) macro cell Z.

At step 14, (platform) macro cell Z deletes its temporary train neighbour cell list for cells A and B.

At step 15, the train gateway 20 releases its connection to (station boundary) macro cell Y.

It will be appreciated that the designation of a cell as a station boundary cell will vary from location to location and will be determined by factors such as the time taken for a train passing a potential station boundary cell to arrive at the platform, the number of tracks that converge on a station, the frequency of train arrivals at the station, and the like.

In addition, station boundary cells will also be deployed to cover trains as they exit the station, such that when a train passes along the track and the train gateway 20 establishes a link to the station boundary cell, the train gateway 20 provides the station boundary cell with configuration information about the cells deployed on the train such that the platform cells can then be informed by the station boundary cell to delete the relevant temporary train neighbour cell list associated with the train, since that neighbour cell list is no longer relevant or useful for any user equipment that are covered by the relevant platform cells. In such an arrangement, the station boundary cell would not need to provide the train gateway 20 with information about the platform cells since the train has left the associated station and the train gateway 20 can simply delete the temporary platform neighbour cell list as it has knowledge that it has connected to a station boundary which is at the exit to the station and so is operating in an exit mode.

Thus, station boundary cells can perform specific roles and some are deployed to cover trains arriving at a station, with others deployed to cover trains leaving a station. It is also possible for a station boundary cell to operate in both an arrival and exit mode. This would typically be when a track is deployed which can be used by trains operating in both directions. In this example, the train gateway 20 would indicate whether the train is arriving at, or leaving, a station (for example, derived from the direction of travel or from sensing whether the train had fallen within the coverage area of a platform cell, so that the station boundary can determine which mode to operate in).

In this example, a specific macro cell (cell X) in a mobile operator's network is designated as a station boundary cell as it provides wireless coverage over a specific part of a railway track in proximity to a station over which trains pass as they arrive at the station. Similarly, a specific macro cell (cell Y) is designated as a station boundary cell as it provides coverage over a part of the railway track for trains that exit the station. In addition, a specific macro cell (cell Z) provides wireless coverage over one of the platforms in the station. It will be appreciated that although the platform and station boundary cells have been described as macro cells, these may also be small cells of the mobile operator's network.

Accordingly, it can be seen that embodiments provide a mechanism to minimise issues that may be encountered when a vehicle that is equipped with small cells arrives at a destination and user equipment either exit or enter the vehicle, thus requiring a seamless and smooth handover of these user equipment between those cells covering the destination and those installed in the vehicle itself. Such an optimization reduces the chances of calls being dropped during a handover and, hence, helps prevent end user dissatisfaction.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as set out in the appended claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions, without departing from the scope of the claims.

## Claims

1. A train gateway network node of a wireless telecommunications network, comprising:
determining logic operable to determine whether a train (10) carrying a mobile base station providing an associated mobile cell (A, B) is transiting to a destination (30) comprising a station platform encompassed by a destination cell (Z) provided by an associated base station, by detecting proximity of said train (10) to a cell (X) designated as a boundary cell prior to said destination, said boundary cell comprising a macro cell that is located at a point which it is known that the train (10) will pass prior to arriving at the station platform; and
neighbour logic operable, in response to said determining logic determining that said train is transiting to said destination, to instruct that a neighbour cell list of at least one of said mobile cell and said destination cell (Z) is updated to indicate that said mobile cell and said destination cell are neighbours.

2. The network node of claim 1, wherein said neighbour logic is operable to instruct that neighbour cell lists of said mobile cell and said destination cell are updated to indicate that said mobile cell (A, B) and said destination cell (Z) are neighbours.

3. The network node of any preceding claim, wherein said determining logic is operable to determine whether said train (10) is transiting from said destination (30) and said neighbour logic is operable, in response to said determining logic determining that said train is transiting from said destination, to instruct that said neighbour cell list of said destination cell is updated to remove said mobile cell as a neighbour.

4. The network node of any preceding claim, wherein said neighbour logic is operable, in response to said determining logic determining that said train is transiting from said destination (30), to instruct that said neighbour cell list of said mobile cell (A, B) is updated to remove said destination cell (Z) as a neighbour.

5. The network node of any preceding claim, wherein said determining logic is operable to determine that said train is transiting from said destination when proximity of said train to a cell designated as a boundary cell (Y) following said destination (30) is detected.

6. The network node of any preceding claim, wherein said network node comprises a mobile gateway (20) co-located with said mobile base station, said determining logic operable to determine that said train (10) is transiting to said destination (30) when said boundary cell (X) is detected by said determining logic and said neighbour logic is operable, in response to said determining logic determining that said train is transiting to said destination (30) , to instruct that said neighbour cell list of said cell is updated to indicate that said mobile cell (A, B) and said destination cell (Z) are neighbours by transmitting characteristics of said mobile cell to said boundary base station.

7. The network node of claim 6, wherein said neighbour logic is operable, in response to said determining logic determining that said train (10) is transiting to said destination (30), to instruct that said neighbour cell list of said mobile cell is updated to indicate that said mobile cell and said destination cell are neighbours in response to characteristics of said cell received from said boundary base station.

8. The network node of claim 6 or 7, wherein said determining logic is operable to determine that said train is transiting from said destination when said boundary cell (Y) following said destination is detected by said determining logic and said neighbour logic is operable, in response to said determining logic determining that said train is transiting from said destination, to instruct that said neighbour cell list of said destination cell is updated to remove said mobile cell as a neighbour by transmitting an instruction to a boundary base station providing said boundary cell.

9. The network node of any one of claims 1 to 5, wherein said network node comprises a boundary cell base station, said determining logic is operable to determine that said train (10) is transiting to said destination (30) when said transmissions from said train (10) are detected by said determining logic and said neighbour logic is operable, in response to said determining logic determining that said train is transiting to said destination (30), to instruct that said neighbour cell list of said destination cell (Z) is updated to indicate that said mobile cell (A, B) and said destination cell (Z) are neighbours in response to characteristics of said mobile cell received from said train.

10. The network node of claim 9, wherein said neighbour logic is operable, in response to said determining logic determining that said train is transiting to said destination, to instruct that said neighbour cell list of said mobile cell (A, B) is updated to indicate that said mobile cell and said destination cell (Z) are neighbours by transmitting characteristics of said destination cell to said train.

11. The network node of claim 9 or 10, wherein said neighbour logic is operable to instruct that said neighbour cell list of said cell is updated to remove that said mobile cell and said destination cell are neighbours in response to an instruction received from said train.

12. The network node of any preceding claim, wherein said train carries a plurality of mobile base stations providing a plurality of mobile cells (A, B) and said destination (30) is encompassed by a plurality of destination cells provided by a plurality of base stations and said neighbour logic operable, in response to said determining logic determining that said train is transiting to said destination, to instruct that a neighbour cell list of said plurality of mobile cells and said plurality of destination cells is updated to indicate that at least a sub-set of said mobile cells and at least a sub-set of said destination cells are neighbours.

13. A method executed by a train gateway network node, the method comprising:
determining whether a train (10) carrying a mobile base station providing an associated mobile cell (A, B) is transiting to a destination (30) comprising a station platform encompassed by a destination cell (Z) provided by an associated base station; and
in response to determining that said train is transiting to said destination by detecting proximity of said train (10) to a cell (X) designated as a boundary cell prior to said destination,, said boundary cell (X) comprising a macro cell that is located at a point which it is known that the train (10) will pass prior to arriving at the station platform, instructing that a neighbour cell list of at least one of said mobile cell and said destination cell (Z) is updated to indicate that said mobile cell and said cell are neighbours.

14. A computer program product which when executed on a processor of a train gateway network node is operable to cause said train gateway network node to perform the method steps of claim 13.

## Patentansprüche

1. Zug-Gateway-Netzknoten eines drahtlosen Kommunikationsnetzes, der Folgendes umfasst:
Bestimmungslogik, die betreibbar ist, durch Detektieren der Nähe des Zugs (10) zu einer Zelle (X), die als eine Grenzzelle vor dem Zielort ausgewiesen ist, zu bestimmen, ob ein Zug (10), der eine mobile Basisstation befördert, die eine zugeordnete mobile Zelle (A, B) bereitstellt, zu einem Zielort (30) durchfährt, der einen Bahnsteig umfasst, der durch eine Zielortzelle (Z) umgeben ist, die durch eine zugeordnete Basisstation bereitgestellt wird, wobei die Grenzzelle eine Makrozelle umfasst, die sich an einem Punkt befindet, von dem bekannt ist, dass der Zug (10) an ihm vorbeikommen wird, bevor er an dem Bahnsteig ankommt; und
Nachbarlogik, die betreibbar ist, als Reaktion darauf, dass die Bestimmungslogik bestimmt, dass der Zug zu dem Zielort durchfährt, anzuweisen, dass eine Nachbarzellenliste von der mobilen Zelle und/oder der Zielortzelle (Z) aktualisiert wird, um anzugeben, dass die mobile Zelle und die Zielortzelle Nachbarn sind.

2. Netzknoten nach Anspruch 1, wobei die Nachbarlogik betreibbar ist, anzuweisen, dass Nachbarzellenlisten der mobilen Zelle und der Zielortzelle aktualisiert werden, um anzugeben, dass die mobile Zelle (A, B) und die Zielortzelle (Z) Nachbarn sind.

3. Netzknoten nach einem vorhergehenden Anspruch, wobei die Bestimmungslogik betreibbar ist, zu bestimmen, ob der Zug (10) von dem Zielort (30) durchfährt, und die Nachbarlogik betreibbar ist, als Reaktion darauf, dass die Bestimmungslogik bestimmt, dass der Zug von dem Zielort durchfährt, anzuweisen, dass die Nachbarzellenliste der Zielortzelle aktualisiert wird, um die mobile Zelle als einen Nachbarn zu entfernen.

4. Netzknoten nach einem vorhergehenden Anspruch, wobei die Nachbarlogik betreibbar ist, als Reaktion darauf, dass die Bestimmungslogik bestimmt, dass der Zug von dem Zielort (30) durchfährt, anzuweisen, dass die Nachbarzellenliste der mobilen Zelle (A, B) aktualisiert wird, um die Zielortzelle (Z) als einen Nachbarn zu entfernen.

5. Netzknoten nach einem vorhergehenden Anspruch, wobei die Bestimmungslogik betreibbar ist, zu bestimmen, dass der Zug von dem Zielort durchfährt, wenn die Nähe des Zugs zu einer Zelle, die als eine Grenzzelle (Y) ausgewiesen ist, die auf den Zielort (30) folgt, detektiert wird.

6. Netzknoten nach einem vorhergehenden Anspruch, wobei der Netzknoten ein mobiles Gateway (20) umfasst, das sich mit der mobilen Basisstation am selben Ort befindet, wobei die Bestimmungslogik betreibbar ist, zu bestimmen, dass der Zug (10) zu dem Zielort (30) durchfährt, wenn die Grenzzelle (X) durch die Bestimmungslogik detektiert wird, und die Nachbarlogik betreibbar ist, als Reaktion darauf, dass die Bestimmungslogik bestimmt, dass der Zug zu dem Zielort (30) durchfährt, anzuweisen, dass die Nachbarzellenliste der Zelle durch Senden von Eigenschaften der mobilen Zelle an die Grenzbasisstation aktualisiert wird, um anzugeben, dass die mobile Zelle (A, B) und die Zielortzelle (Z) Nachbarn sind.

7. Netzknoten nach Anspruch 6, wobei die Nachbarlogik betreibbar ist, als Reaktion darauf, dass die Bestimmungslogik bestimmt, dass der Zug (10) zu dem Zielort (30) durchfährt, anzuweisen, dass die Nachbarzellenliste der mobilen Zelle als Reaktion auf die von der Grenzbasisstation empfangenen Eigenschaften der Zelle aktualisiert wird, um anzugeben, dass die mobile Zelle und die Zielortzelle Nachbarn sind.

8. Netzknoten nach Anspruch 6 oder 7, wobei die Bestimmungslogik betreibbar ist, zu bestimmen, dass der Zug von dem Zielort durchfährt, wenn die Grenzzelle (Y), die auf den Zielort folgt, durch die Bestimmungslogik detektiert wird, und die Nachbarzelle betreibbar ist, als Reaktion darauf, dass die Bestimmungslogik bestimmt, dass der Zug von dem Zielort durchfährt, anzuweisen, dass die Nachbarzellenliste der Zielortzelle durch Senden einer Anweisung an eine Grenzbasisstation, die die Grenzzelle bereitstellt, aktualisiert wird, um die mobile Zelle als einen Nachbarn zu entfernen.

9. Netzknoten nach einem der Ansprüche 1 bis 5, wobei der Netzknoten eine Grenzzellenbasisstation umfasst, wobei die Bestimmungslogik betreibbar ist, zu bestimmen, dass der Zug (10) zu dem Zielort (30) durchfährt, wenn die Übertragungen von dem Zug (10) durch die Bestimmungslogik detektiert werden, und die Nachbarlogik betreibbar ist, als Reaktion darauf, dass die Bestimmungslogik bestimmt, dass der Zug zu dem Zielort (30) durchfährt, anzuweisen, dass die Nachbarzellenliste der Zielortzelle (Z) als Reaktion auf die Eigenschafen der mobilen Zelle, die von dem Zug empfangen werden, aktualisiert wird, um anzugeben, dass die mobile Zelle (A, B) und die Zielortzelle (Y) Nachbarn sind.

10. Netzknoten nach Anspruch 9, wobei die Nachbarlogik betreibbar ist, als Reaktion darauf, dass die Bestimmungslogik bestimmt, dass der Zug zu dem Zielort durchfährt, anzuweisen, dass die Nachbarzellenliste der mobilen Zelle (A, B) durch Senden von Eigenschaften der Zielortzelle an den Zug aktualisiert wird, um anzugeben, dass die mobile Zelle und die Zielortzelle (Z) Nachbarn sind.

11. Netzknoten nach Anspruch 9 oder 10, wobei die Nachbarlogik betreibbar ist, anzuweisen, dass die Nachbarzellenliste der Zelle als Reaktion auf eine Anweisung, die von dem Zug empfangen wird, aktualisiert wird, um zu entfernen, dass die mobile Zelle und die Zielortzelle Nachbarn sind.

12. Netzknoten nach einem vorhergehenden Anspruch, wobei der Zug mehrere mobile Basisstationen befördert, die mehrere mobile Zellen (A, B) bereitstellen und der Zielort (30) durch mehrere Zielortzellen umgeben ist, die durch mehrere Basisstationen bereitgestellt werden, und die Nachbarlogik betreibbar ist, als Reaktion darauf, dass die Bestimmungslogik bestimmt, dass der Zug zu dem Zielort durchfährt, anzuweisen, dass eine Nachbarzellenliste der mehreren mobilen Zellen und der mehreren Zielortzellen aktualisiert wird, um anzugeben, dass zumindest eine Untergruppe der mobilen Zellen und zumindest eine Untergruppe der Zielortzellen Nachbarn sind.

13. Verfahren, dass durch einen Zug-Gateway-Netzknoten ausgeführt wird, wobei das Verfahren Folgendes umfasst:
Bestimmen, ob ein Zug (10), der eine mobile Basisstation befördert, die eine zugeordnete mobile Zelle (A, B) bereitstellt, zu einem Zielort (30) durchfährt, der einen Bahnsteig umfasst, der durch eine Zielortzelle (Z) umgeben ist, die durch eine zugeordnete Basisstation bereitgestellt wird; und
als Reaktion auf das Bestimmen durch Detektieren der Nähe des Zugs (10) zu einer Zelle (X), die als eine Grenzzelle vor dem Zielort ausgewiesen ist, dass der Zug zu dem Zielort durchfährt, wobei die Grenzzelle (X) eine Makrozelle umfasst, die sich an einem Punkt befindet, von dem bekannt ist, dass der Zug (10) an ihm vorbeifahren wird, bevor er an dem Bahnsteig ankommt, Anweisen, dass eine Nachbarzellenliste von der mobilen Zelle und/oder der Zielortzelle (Z) aktualisiert wird, um anzugeben, dass die mobile Zelle und die Zelle Nachbarn sind.

14. Computerprogrammprodukt, das dann, wenn es auf einem Prozessor eines Zug-Gateway-Netzknotens ausgeführt wird, betreibbar ist, zu bewirken, dass der Zug-Gateway-Netzknoten die Verfahrensschritte des Anspruchs 13 ausführt.

## Revendications

1. Nœud de réseau de passerelle de train d'un réseau de télécommunication sans fil, comprenant :
une logique de détermination utilisable pour déterminer si un train (10) transportant une station de base mobile fournissant une cellule mobile associée (A, B) transite vers une destination (30) comprenant un quai de gare entouré par une cellule de destination (Z) fournie par une station de base associée, en détectant la proximité dudit train (10) par rapport à une cellule (X) désignée comme cellule limite avant ladite destination, ladite cellule limite comprenant une macrocellule qui est située en un point au niveau duquel on sait que le train (10) passera avant d'arriver au quai de gare ; et
une logique de voisinage utilisable, en réponse à ladite logique de détermination déterminant que ledit train transite vers ladite destination, pour donner pour instruction qu'une liste de cellules voisines d'au moins l'une de ladite cellule mobile et de ladite cellule de destination (Z) soit mise à jour pour indiquer que ladite cellule mobile et ladite cellule de destination sont voisines.

2. Nœud de réseau selon la revendication 1, dans lequel ladite logique de voisinage est utilisable pour donner pour instruction que des listes de cellules voisines de ladite cellule mobile et de ladite cellule de destination soient mises à jour pour indiquer que ladite cellule mobile (A, B) et ladite cellule de destination (Z) sont voisines.

3. Nœud de réseau selon l'une quelconque des revendications précédentes, dans lequel ladite logique de détermination est utilisable pour déterminer si ledit train (10) transite depuis ladite destination (30), et ladite logique de voisinage est utilisable, en réponse à ladite logique de détermination déterminant que ledit train transite depuis ladite destination, pour donner pour instruction que ladite liste de cellules voisines de ladite cellule de destination soit mise à jour pour supprimer ladite cellule mobile en tant que voisine.

4. Nœud de réseau selon l'une quelconque des revendications précédentes, dans lequel ladite logique de voisinage est utilisable, en réponse à ladite logique de détermination déterminant que ledit train transite depuis ladite destination (30), pour donner pour instruction que ladite liste de cellules voisines de ladite cellule mobile (A, B) soit mise à jour pour supprimer ladite cellule de destination (Z) en tant que voisine.

5. Nœud de réseau selon l'une quelconque des revendications précédentes, dans lequel ladite logique de détermination est utilisable pour déterminer que ledit train transite depuis ladite destination lorsque la proximité dudit train par rapport à une cellule désignée comme cellule limite (Y) à la suite de ladite destination (30) est détectée.

6. Nœud de réseau selon l'une quelconque des revendications précédentes, dans lequel ledit nœud de réseau comprend une passerelle mobile (20) colocalisée avec ladite station de base mobile, ladite logique de détermination étant utilisable pour déterminer que ledit train (10) transite vers ladite destination (30) lorsque ladite cellule limite (X) est détectée par ladite logique de détermination, et ladite logique de voisinage est utilisable, en réponse à ladite logique de détermination déterminant que ledit train transite vers ladite destination (30), pour donner pour instruction que ladite liste de cellules voisines de ladite cellule soit mise à jour pour indiquer que ladite cellule mobile (A, B) et ladite cellule de destination (Z) sont voisines en transmettant des caractéristiques de ladite cellule mobile à ladite station de base limite.

7. Nœud de réseau selon la revendication 6, dans lequel ladite logique de voisinage est utilisable, en réponse à ladite logique de détermination déterminant que ledit train (10) transite vers ladite destination (30), pour donner pour instruction que ladite liste de cellules voisines de ladite cellule mobile soit mise à jour pour indiquer que ladite cellule mobile et ladite cellule de destination sont voisines en réponse à des caractéristiques de ladite cellule reçues de ladite station de base limite.

8. Nœud de réseau selon la revendication 6 ou la revendication 7, dans lequel ladite logique de détermination est utilisable pour déterminer que ledit train transite depuis ladite destination lorsque ladite cellule limite (Y) suivant ladite destination est détectée par ladite logique de détermination, et ladite logique de voisinage est utilisable, en réponse à ladite logique de détermination déterminant que ledit train transite depuis ladite destination, pour donner pour instruction que ladite liste de cellules voisines de ladite cellule de destination soit mise à jour pour supprimer ladite cellule mobile en tant que voisine en transmettant une instruction à une station de base limite fournissant ladite cellule limite.

9. Nœud de réseau selon l'une quelconque des revendications 1 à 5, dans lequel ledit nœud de réseau comprend une station de base de cellule limite, ladite logique de détermination est utilisable pour déterminer que ledit train (10) transite vers ladite destination (30) lorsque lesdites transmissions provenant dudit train (10) sont détectées par ladite logique de détermination, et que ladite logique de voisinage est utilisable, en réponse à ladite logique de détermination déterminant que ledit train transite vers ladite destination (30), pour donner pour instruction que ladite liste de cellules voisines de ladite cellule de destination (Z) soit mise à jour pour indiquer que ladite cellule mobile (A, B) et ladite cellule de destination (Z) sont voisines en réponse aux caractéristiques de ladite cellule mobile reçues dudit train.

10. Nœud de réseau selon la revendication 9, dans lequel ladite logique de voisinage est utilisable, en réponse à ladite logique de détermination déterminant que ledit train transite vers ladite destination, pour donner pour instruction que ladite liste de cellules voisines de ladite cellule mobile (A, B) soit mise à jour pour indiquer que ladite cellule mobile et ladite cellule de destination (Z) sont voisines en transmettant les caractéristiques de ladite cellule de destination audit train.

11. Nœud de réseau selon la revendication 9 ou la revendication 10, dans lequel ladite logique de voisinage est utilisable pour donner pour instruction que ladite liste de cellules voisines de ladite cellule soit mise à jour pour supprimer que ladite cellule mobile et ladite cellule de destination sont voisines en réponse à une instruction reçue dudit train.

12. Nœud de réseau selon l'une quelconque des revendications précédentes, dans lequel ledit train transporte une pluralité de stations de base mobiles fournissant une pluralité de cellules mobiles (A, B) et ladite destination (30) est entourée par une pluralité de cellules de destination fournies par une pluralité de stations de base, et ladite logique de voisinage est utilisable, en réponse à ladite logique de détermination déterminant que ledit train transite vers ladite destination, pour donner pour instruction qu'une liste de cellules voisines de ladite pluralité de cellules mobiles et de ladite pluralité de cellules de destination soit mise à jour pour indiquer qu'au moins un sous-ensemble desdites cellules mobiles et au moins un sous-ensemble desdites cellules de destination sont voisins.

13. Procédé exécuté par un nœud de réseau de passerelle de train, le procédé comprenant :
la détermination du fait qu'un train (10) transportant une station de base mobile fournissant une cellule mobile associée (A, B) transite, ou non, vers une destination (30) comprenant un quai de gare entouré par une cellule de destination (Z) fournie par une station de base associée ; et
en réponse à la détermination que ledit train transite vers ladite destination en détectant la proximité dudit train (10) par rapport à une cellule (X) désignée comme cellule limite avant ladite destination, ladite cellule limite (X) comprenant une macrocellule qui est située en un point au niveau duquel on sait que le train (10) passera avant d'arriver au quai de gare, de donner pour instruction qu'une liste de cellules voisines d'au moins une de ladite cellule mobile et de ladite cellule de destination (Z) soit mise à jour pour indiquer que ladite cellule mobile et ladite cellule sont voisines.

14. Produit programme informatique qui, lorsqu'il est exécuté sur un processeur d'un nœud de réseau de passerelle de train, est utilisable pour amener ledit nœud de réseau de passerelle de train à exécuter les étapes de procédé de la revendication 13.
